# EUROPEAN PATENT APPLICATION

(11) **EP 3 716 641 A1**
(43) Date of publication of application: **30.09.2020**
(21) Application number: 18887862.3
(22) Date of filing: 28.11.2018
(51) Int. Cl.: H04Q 11/00

(54) **DATA TRANSPORT METHOD, DEVICE AND SYSTEM**

(30) Priority: 15.12.2017 CN 201711353619
(71) Applicant: Huawei Technologies Co., Ltd., Longgang District Shenzhen, Guangdong 518129 (CN)
(72) Inventor: XIANG, Junling, Shenzhen, Guangdong 518129 (CN); XIE, Guang, Shenzhen, Guangdong 518129 (CN)
(74) Representative: Grünecker Patent- und Rechtsanwälte PartG mbB
(86) International application number: PCT/CN2018/117832
(87) International publication number: WO 2019/114544

(57) **Abstract**

This application discloses a data forwarding method, apparatus, and system. In a possible implementation, a data forwarding apparatus includes a transceiver and a processor. The transceiver receives an uplink data frame sent by an optical network unit (ONU) device. The processor processes the uplink data frame to obtain a data frame group that is sent to a same destination ONU device. Then, the processor encapsulates this data frame group into an optical transport network (OTN) data frame, and sends the OTN data frame by using the transceiver. According to a data transfer technology disclosed in this application, a cost-effective ONU device is used, and a service with a guaranteed bandwidth requirement is carried in an OTN data frame having a corresponding bandwidth. This reduces device costs of a transport network in which the service with a guaranteed bandwidth requirement is transmitted, and further can ensure service transmission quality.

## Description

### TECHNICAL FIELD

This application relates to the optical communications field, and in particular, to a data transfer technology.

### BACKGROUND

An optical transport network (Optical Transport Network, OTN) has advantages such as a large capacity and a low latency, and is widely applied to data transmission in a backbone network or an aggregation network. A variety of services such as a video service, an enterprise private line service, and a wireless service are transmitted in the OTN. The OTN may further be used as a bearer network of another network. For example, the OTN may be used as a bearer network of a passive optical network (Passive Optical Network, PON), to extend a transmission distance of a PON service or provide better service protection. For another example, the OTN may be used for transmission of a plurality of services in a 5G (5^{th} Generation) network.

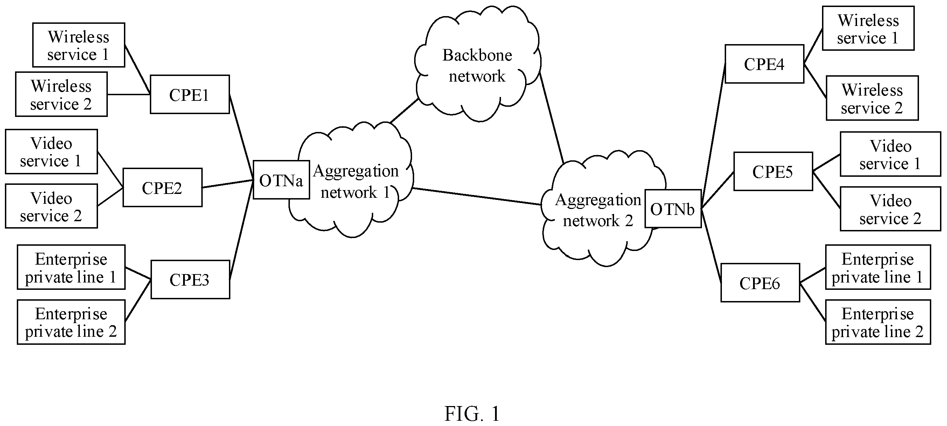

As shown in FIG. 1, for each different service, currently a dedicated device needs to be customized to transmit client data to an OTN bearer network. For example, for the video service, dedicated CPE2 (Customer Premise Equipment, customer premises equipment) and CPE5 need to be customized, whereas for the enterprise private line service, CPE3 and CPE6 that support different data formats need to be customized. The CPE devices add the services to OTN data frames, and then send the OTN data frames to OTN devices (for example, an OTNa device and an OTNb device in FIG. 1) for data transmission. Specifically, these services may be transmitted by using one OTN network. Alternatively, as shown in FIG. 1, the services may be transmitted by using a plurality of OTN networks, for example, by using two aggregation networks or by using one backbone network and two aggregation networks. Because there is a comparatively small quantity of devices for a single service type, such devices are costly. Another alternative method is to use one OTN access device to support different types of devices; consequently, device complexity is greatly increased, and device costs are high.

Therefore, a solution is urgently needed to resolve a problem of high price and complexity of a customized device used by an OTN network.

### SUMMARY

Embodiments of this application provide a data transfer apparatus, device, and method, to resolve a prior-art problem of excessively high costs or high complexity of a customized device.

According to a first aspect, an embodiment of this application provides a data transfer apparatus, where the apparatus includes a transceiver and a processor, where
the transceiver is configured to receive a plurality of first data frames, where the first data frame is a passive optical network (PON) uplink data frame or a data frame carrying a PON uplink data frame;
the processor is configured to: obtain a second data frame group based on the plurality of first data frames, where the second data frame group is used to carry service data that is sent to a same destination device; and encapsulate the second data frame group into a third data frame; and
the transceiver is further configured to send the third data frame carrying the second data frame group.

In a possible design, the third data frame is an optical transport network (OTN) data frame or a flexible Ethernet (FlexE) data frame. The OTN data frame is a flexible optical data unit (ODUflex) data frame or another data frame, and a rate of the another data frame matches a rate of the second data frame group.

In a possible design, depending on different specific processing manners of the plurality of received data frames, the obtaining a second data frame group based on the plurality of first data frames includes a plurality of specific implementations. The following different implementation manners are the same for that the first data frame is a PON uplink data frame or a data frame carrying a PON uplink data frame. If the first data frame is a data frame carrying a PON uplink data frame, before a specific implementation manner below is used, the data forwarding apparatus needs to first obtain the PON uplink data frame through parsing, and then process the PON uplink data frame, instead of directly processing the first data frame. To avoid ambiguity, the PON uplink data frame is used for description in the following descriptions.

In a possible implementation, the obtaining a second data frame group based on the plurality of first data frames includes: grouping data frames that are in the PON uplink data frames and have a same time-division channel identifier into the second data frame group.

In another possible implementation, the obtaining a second data frame group based on the plurality of first data frames specifically includes:
grouping data frames that are in the plurality of PON uplink data frames and have a same time-division channel identifier into a third data frame group; and
obtaining client data by parsing the third data frame group, and grouping the client data into the second data frame group.

In still another implementation, the obtaining a second data frame group based on the plurality of first data frames specifically includes:
grouping data frames that are in the plurality of PON uplink data frames and have a same time-division channel identifier into a fourth data frame group; and
obtaining a plurality of gigabit-capable passive optical network encapsulation method (GEM) frames by parsing the fourth data frame group, and grouping the plurality of GEM frames into the second data frame group.

It should be noted that, the GEM frames mentioned in the foregoing still another possible implementation are in a frame format defined in a current international standard. However, the PON uplink data frames may be in a data frame format specified in an international standard, or may be in a user-defined data frame format. This is not limited in this application.

In a possible design, the processor is further configured to send bandwidth allocation information to an ONU, where the bandwidth allocation information includes a time-division channel identifier, and a start location and an end location, of a time-division channel corresponding to the time-division channel identifier, in a byte of an uplink data frame. Optionally, the processor is further configured to receive bandwidth adjustment information, and adjust a bandwidth of the third data frame and a bandwidth of the ONU based on the bandwidth adjustment information.

In a possible design, the processor is further configured to perform a cross-connection on the second data frame group. Specifically, the cross-connection is a time division cross-connection or a space division cross-connection.

According to a second aspect, an embodiment of this application provides another data transfer apparatus, where the apparatus includes a transceiver and a processor, where
the transceiver is configured to receive a plurality of first data frames, wherein the first data frame is an optical transport network (OTN) data frame or a flexible Ethernet (FlexE) data frame;
the processor is configured to: obtain a plurality of second data frames by parsing the plurality of OTN data frames; and encapsulate data frames that are in the plurality of second data frames and that are sent to a same destination device into a passive optical network (PON) downlink data frame; and
the transceiver is further configured to send the PON downlink data frame.

In a possible design, the processor is further configured to send bandwidth allocation information to an optical network unit (ONU), where the bandwidth allocation information includes a time-division channel identifier, and a start location and an end location, of a time-division channel corresponding to the time-division channel identifier, in a byte of an uplink data frame. Optionally, the processor is further configured to: receive bandwidth adjustment information, and perform adjustment based on the bandwidth adjustment information and send another piece of bandwidth adjustment information to one or more ONUs.

In a possible design, the OTN data frame is a flexible optical data unit (ODUflex) data frame or another data frame, and a rate of the another data frame is the same as a rate of the plurality of first data frame groups.

In a possible design, the processor is further configured to perform a cross-connection on the plurality of second data frame groups. Specifically, the cross-connection is a time division cross-connection or a space division cross-connection.

In a possible design, depending on a specific frame structure of the second data frames, the encapsulating data frames that are in the plurality of second data frames and that are sent to a same destination device into a PON downlink data frame includes different implementations.

In a possible implementation, if a frame format of the plurality of second data frames is a data frame format received by using a slot resource indicated by a transport container (T-CONT), the encapsulating data frames that are in the plurality of second data frames and that are sent to a same destination device into a PON downlink data frame specifically includes:
obtaining one gigabit-capable passive optical network encapsulation method (GEM) frame by parsing each of the data frames that are in the plurality of second data frames and that are sent to the same destination device, and encapsulating each GEM frame into the PON downlink data frame.

In another possible implementation, if a frame format of the plurality of second data frames is a gigabit-capable passive optical network encapsulation method (GEM) frame format, the encapsulating data frames that are in the plurality of second data frames and that are sent to a same destination device into a PON downlink data frame specifically includes:
directly encapsulating the data frames that are in the plurality of second data frames and that are sent to the same destination device into the PON downlink data frame.

In still another possible implementation, if a frame format of the plurality of second data frames is a client data frame format, the encapsulating data frames that are in the plurality of second data frames and that are sent to the same destination device into a PON downlink data frame specifically includes:
encapsulating each of the data frames that are in the plurality of second data frames and that are sent to the same destination device into one gigabit-capable passive optical network encapsulation method (GEM) frame, and encapsulating each GEM frame into the PON downlink data frame.

In the foregoing different implementations, it is assumed that a PON downlink data frame format specified in a current international standard is used. If a user-defined PON downlink data frame format is used, an encapsulation layer and method of the user-defined format need to be followed.

In a possible design, the sending the PON downlink data frame includes: encapsulating the downlink data frame into a third data frame, and then sending the third data frame. That is, a bearer network is further needed to complete data forwarding. The bearer network may be an OTN network or a FlexE network. Therefore, the third data frame may be an OTN data frame or a FlexE frame.

According to a third aspect, an embodiment of this application provides a data transfer method. The method includes all steps performed by the apparatus described in any one of the first aspect or the implementations of the first aspect. In the method, received data frames are grouped and processed, and are sent by using a transport data frame whose bandwidth matches a bandwidth of a data frame group.

According to a fourth aspect, an embodiment of this application provides another data transfer method. The method includes all steps performed by the apparatus described in any one of the second aspect or the implementations of the second aspect. In the method, after received data frames are processed to some extent, the received data frames are grouped depending on a destination device to which the data frames need to be sent, and the data frames obtained through grouping are carried in a PON downlink data frame and sent.

According to a fifth aspect, an embodiment of this application provides another data transfer device. The device includes the apparatus described in any one of the first aspect or the implementations of the first aspect and the apparatus described in any one of the second aspect or the implementations of the second aspect. It should be noted that, such device is a device having a two-way processing capability. If the device has a bandwidth management function, bandwidth allocation information sent by the device may assist to receive data, and may also assist to send data.

According to a sixth aspect, an embodiment of this application provides another data forwarding system. The system includes the apparatus described in any one of the first aspect or the implementations of the first aspect and the apparatus described in any one of the second aspect or the implementations of the second aspect. Optionally, the system may further include another network device, for example, another network device directly or indirectly connected to the foregoing two devices, such as an ONU device, an OLT device, another OTN device, or another FlexE device.

According to a seventh aspect, an embodiment of this application further provides a computer storage medium. The storage medium stores a software program. When being read and executed by one or more processors, the software program can implement the method according to any design in any one of the third aspect and the fourth aspect.

According to an eighth aspect, an embodiment of this application provides a computer program product including an instruction. When the computer program product is run on a computer, the computer is enabled to perform the method according to any design in any one of the third aspect and the fourth aspect.

According to a ninth aspect, an embodiment of this application provides a chip. The chip is connected to a memory, and is configured to read and execute a software program stored in the memory, to implement the method according to any design in any one of the third aspect and the fourth aspect.

A current cost-effective ONU device is used, service data that is sent to different destination devices is processed differently, and a data transfer channel with a guaranteed bandwidth is allocated to these data frames. This application effectively reduces costs of carrying services having a guaranteed bandwidth requirement. In addition, transmission quality of the service data can be ensured by connecting a plurality of data channels having a guaranteed bandwidth.

### BRIEF DESCRIPTION OF DRAWINGS

FIG. 1 is a schematic network diagram of an existing service access mode;
FIG. 2 is a schematic diagram of a possible application scenario according to this application;
FIG. 3 is a schematic hardware structural diagram of an optical transport network device;
FIG. 4 is a schematic flowchart of a possible service sending method according to this application;
FIG. 5 is a schematic flowchart of a possible service processing method according to Embodiment 1 of this application;
FIG. 6 is a schematic flowchart of another possible service processing method according to Embodiment 2 of this application;
FIG. 7 is a schematic flowchart of still another possible service processing method according to Embodiment 3 of this application;
FIG. 8 is a schematic diagram of another possible application scenario according to this application;
FIG. 9 is a schematic flowchart of a possible service processing method according to Embodiment 4 of this application;
FIG. 10 is a schematic flowchart of another possible service processing method according to Embodiment 4 of this application;
FIG. 11 is a schematic structural diagram of a possible device according to this application; and
FIG. 12 is a schematic structural diagram of another possible device according to this application.

### DESCRIPTION OF EMBODIMENTS

Network architectures and service scenarios described in the embodiments of this application are intended to more clearly describe the technical solutions in the embodiments of this application, and do not constitute any limitation on the technical solutions provided in the embodiments of this application. A person of ordinary skill in the art may learn that the technical solutions provided in the embodiments of this application are also applicable to a similar technical problem as a network architecture evolves and a new service scenario emerges.

### General overview:

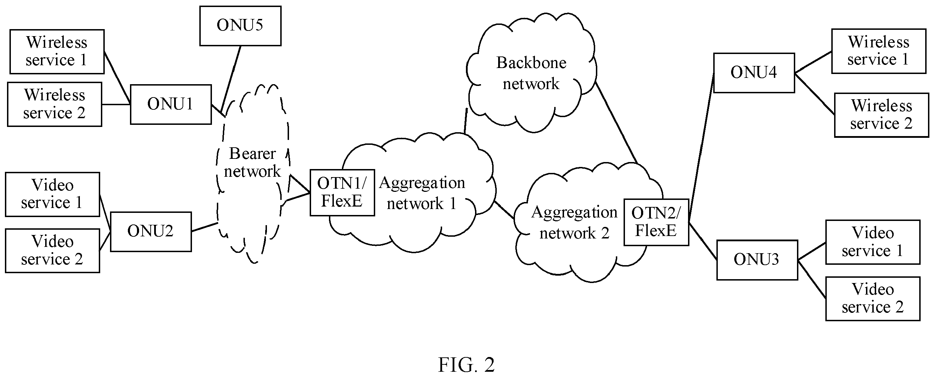

The embodiments of this application are applicable to a transport network, for example, an optical transport network (Optical transport Network, OTN) or a flexible Ethernet (Flexible Ethernet, FlexE). The embodiments of this application are particularly applicable to a scenario in which a plurality of services need to be transmitted. FIG. 2 is a possible network scenario according to this application. By using a new device disclosed in this application, a plurality of different services (for example, a wireless service and a video service) may be transmitted to an aggregation network and a backbone network by using an optical network unit (Optical Network Unit, ONU) device. As shown in FIG. 2, the new device is an OTN1/FlexE device and an OTN2/FlexE device, that is, the device may be an OTN device or a FlexE device. Currently, an optical transport network is usually used as the aggregation network and the backbone network. Depending on a specific transmission requirement, the backbone network is an optional network. In addition, there may be a bearer network between the ONU device and the new device, to extend a signal transmission distance between the two devices. Such bearer network may also be an OTN network or another network capable of performing long-distance transmission, for example, a FlexE network. It should be noted that a service type in this application is mainly a service having a guaranteed bandwidth requirement, for example, a wireless service having a guaranteed bandwidth of 4.5 G. This application may also be specific to a hybrid service scenario having different requirements, where at least one service having a bandwidth guarantee requirement is included. As shown in FIG. 2, one OTN1/FlexE device may be connected to a plurality of ONU devices, for example, an ONU1, an ONU2, and an ONU5. The ONU2 is connected to the OTN1 (or FlexE) device after being connected to the ONU5 by using an optical splitter (not shown in the figure).

One transport network is usually formed by connecting a plurality of devices by using an optical fiber, and different topology types such as a linear topology, a ring topology, and a mesh topology may be included depending on a specific requirement. It should be noted that specific networking manners of the bearer network, the aggregation network, and the backbone network are not limited in this application.

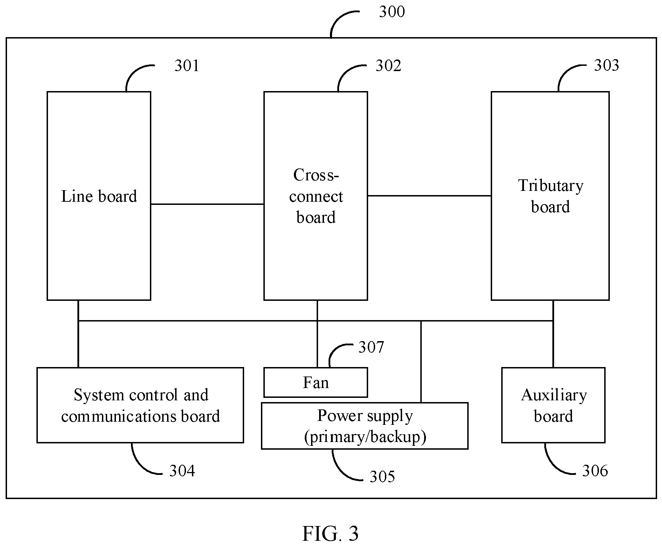

For example, the device is an OTN device. FIG. 3 is a diagram of a hardware structure of an OTN device. Specifically, the OTN device 300 includes a power supply 305, a fan 307, and an auxiliary board 306, and may further include a tributary board 303, a line board 301, a cross-connect board 302, an optical processing board (not shown in FIG. 3), and a system control and communications board 304. It should be noted that each device may specifically include different board types and different board quantities depending on a specific requirement. For example, a network device serving as a core node may have no tributary board 303. A network device serving as an edge node may have a plurality of tributary boards 303. The power supply 305 is configured to supply power to the OTN device, and may include a primary power supply and a backup power supply. The fan 307 is configured to dissipate heat for the device. The auxiliary board 306 is configured to provide an auxiliary function, for example, provide an external alarm or access an external clock. The tributary board 303, the cross-connect board 302, and the line board 301 are mainly configured to process an electrical signal of the OTN. Usually, the electrical signal of the OTN may be referred to as an ODU signal, an OTN frame, or an ODU data frame. For brief description, the electrical signal of the OTN is collectively referred to as the ODU data frame below. The tributary board 303 is configured to receive and send a variety of client services, for example, an SDH service, a packet service, an Ethernet service, and a fronthaul service. Further, the tributary board may be divided into an optical module on a client side and a signal processor. The optical module on the client side may be an optical transceiver, configured to receive and/or send a client signal. The signal processor is configured to map and demap the client signal to the ODU data frame. The cross-connect board is configured to exchange ODU data frames, to exchange ODU data frames of one or more types. The line board 301 mainly processes an ODU data frame on a line side. Specifically, the line board 301 may be divided into an optical module on the line side and a signal processor. The optical module on the line side may be an optical transceiver on the line side, configured to receive and/or send the ODU data frame. The signal processor is configured to multiplex and demultiplex an ODU data frame on the line side, or map and demap the ODU data frame on the line side. The system control and communications board is configured to implement system control and communication. Specifically, information may be collected from different boards by using a backplane, or a control instruction is sent to a corresponding board. It should be noted that, unless otherwise specified, there may be one or more specific components (for example, signal processors). This is not limited in this application. It should be further noted that the embodiments of this application are specific to an OTN device that includes at least a tributary board 301.

If the new device is a FlexE device, a hardware structure of the device is the same as that in FIG. 3. The only difference is that different frame structures are used, and therefore there is a difference in processing a data frame. For example, before the service data is carried, the service data needs to be encoded. It should be noted that the FlexE network is currently in a technical research period, and is not used in an actual application. However, the FlexE network is considered as a feasible transport network technology. Therefore, the method disclosed in this application may also be applicable to this technology.

Passive optical network (Passive Optical Network, PON) devices are currently widely applied, and have a comparatively low price. However, due to features such as a limited transmission distance and a single networking mode of a PON, the PON is mainly applied to a broadband access range currently. Currently, an application of combining the PON and a transport network (for example, an OTN) is commonly used when the OTN network is used as a bearer network of the PON network, so that a PON service can be transmitted over a longer distance, or a stronger protection capability (for example, 1+1 protection) is provided. Different from an existing manner, this application discloses a new OTN device, so that a conventional OTN access service can be transmitted by using an ONU device, and the ONU device is used as a CPE device, thereby reducing costs of an OTN client access device. A person skilled in the art may know that, when a FlexE technology becomes a practicable transport technology, the foregoing OTN device may alternatively be a FlexE device.

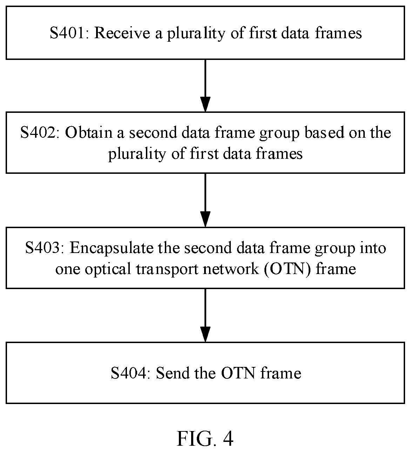

For example, the foregoing new device is used as a device for sending access service data. FIG. 4 describes a possible service sending procedure. It should be noted that, an OTN device is used as an example in FIG. 4, but the procedure described in FIG. 4 is also applicable to a FlexE device.

S401: Receive a plurality of first data frames.

Specifically, one OTN device receives the plurality of first data frames. In a possible implementation, the OTN device is directly connected to a plurality of ONU devices, and in this case, the first data frame is a PON uplink data frame. In another possible implementation manner, the OTN device is connected to a plurality of ONU devices by using a bearer network, and in this case, the first data frame may be a frame structure carrying a PON uplink data frame. For example, the first data frame is an OTN frame structure or a FlexE frame structure. Regardless of a network scenario, the plurality of first data frames may be sent by the plurality of ONU devices. The ONU devices are configured to carry client services. One of the client services includes a plurality of service data frames. For a more detailed description, refer to descriptions in Embodiments 1 to 3. Details are not described herein.

S402: Obtain a second data frame group based on the plurality of first data frames.

Specifically, the OTN device processes the plurality of received first data frames. Specifically, different frame formats of the first data frames indicate different processing manners. For example, if the first data frames are all sent by using a transport container (Transport Container, T-CONT) in the PON network, the first data frames are determined based on a time-division channel identifier corresponding to the T-CONT, that is, first data frames with a same time-division channel identifier are grouped into one group, to obtain the second data frame group. For another processing manner, refer to descriptions in Embodiment 1. Details are not described herein. For example, data frames belonging to a same client service (for example, the video service 1 shown in FIG. 1) or data frames carrying service data of a same client service are grouped into one group for subsequent processing. An advantage of this lies in that it can be ensured that the data belonging to the same client service can be transmitted by using a dedicated channel in an OTN network, so that transmission quality of the client service can be ensured. Alternatively, in this step, data frames that are corresponding to a plurality of client services and that are sent to a same destination device may be grouped into one group for subsequent processing. It may be understood that, the above-mentioned processing of a single piece of service data is a specific example specific to processing of the plurality of client services sent to the same destination device. It should be further noted that, the OTN device is not necessarily directly determined by using a destination address, and an external controller or a management system may notify, in another manner, the new OTN device of a data frame processing strategy. For example, the external controller may instruct the OTN device to group one or more virtual local area network identifier (Virtual Local Area Network Identifier, VLAN-ID) values into one group. Alternatively, the OTN device processes one or several T-CONT IDs as one group. However, according to different strategies, destination addresses are essentially used for processing. How the OTN device specifically determines which parameter is used for grouping is not limited in this application.

S403: Encapsulate the second data frame group into one optical transport network (OTN) frame.

Specifically, the OTN device encapsulates the obtained second data frame group into one OTN frame. The OTN frame is selected depending on a bandwidth size of a service carried in the second data frame group. For example, if a bandwidth of the service is 3.5 G, an ODUflex data frame defined in a current OTN standard may be selected to carry the service. For another example, if a bandwidth of the service is 500 M, an ODU0 or an OTN container of a smaller granularity that may be subsequently defined may be selected to carry the service. A specific manner of selecting an OTN frame format is not limited in this application, and it is only required that a bandwidth size of a selected OTN frame matches the bandwidth of the service corresponding to the second data frame group. For example, the second data frame group is a data frame of a single service. Generally, a bandwidth size of an OTN frame used to carry a service is basically the same as a bandwidth size pre-configured for the service. However, a bandwidth size of an actual service (that is, a bandwidth of the second data frame group) may be less than the preset value. Therefore, the actual bandwidth of the OTN frame is greater than or equal to the bandwidth of the second data frame group. If the second data frame group includes data frames of a plurality of service, the bandwidth size of the OTN frame used to carry the service is basically the same as a sum of bandwidth sizes pre-configured for the plurality of services.

S404: Send the OTN frame.

Specifically, the OTN device sends the OTN frame to another OTN device in the network in which the OTN device is located.

Correspondingly, the OTN device serving as a receiving side needs to receive the OTN frame, restore the second data frame group carried in the OTN frame, process the second data frame group to obtain an appropriate downlink transmission format, and send the appropriate downlink transmission format to a destination device corresponding to the data frame. The service data is sent to a final receiving device after being transmitted by using one or more devices.

According to the foregoing method, a variety of access services may be transmitted to the OTN network by using the ONU device. The ONU device encapsulates client data by using a uniform uplink transmission frame format, and does not need to be customized based on different services. In this way, complexity of the OTN access device is also reduced. In addition, the ONU device is cheap, so that access device costs can be greatly reduced.

The following further describes the embodiments of this application in detail based on the foregoing common aspects of the wavelength alignment technology in the embodiments of this application. It should be noted that the terms "first", "second", and the like in the following embodiments of this application are used to distinguish between similar objects, and do not need to be used to describe a specific order or a sequence. It should be understood that the data used in such a way are interchangeable in proper circumstances, so that the embodiments described herein can be implemented in other orders than the order illustrated or described herein.

### Embodiment 1

An embodiment of this application provides a data processing method, apparatus, and system. In this embodiment, the network scenario in FIG. 2 is used as an example, and it is assumed that the ONU1 device, the ONU2 device, and the OTN1 device are devices on a service sending side, and the OTN2, the ONU4, and the ONU3 are devices on a service receiving side. It should be noted that in this embodiment, it is assumed that there is no bearer network between an ONU device and an OTN device. In an actual application process, any ONU device may be a sending device or a receiving device, and an OTN device corresponding to the ONU device is a sending device or a receiving device. Generally, both the ONU device and the OTN device usually have functions of sending and receiving service data.

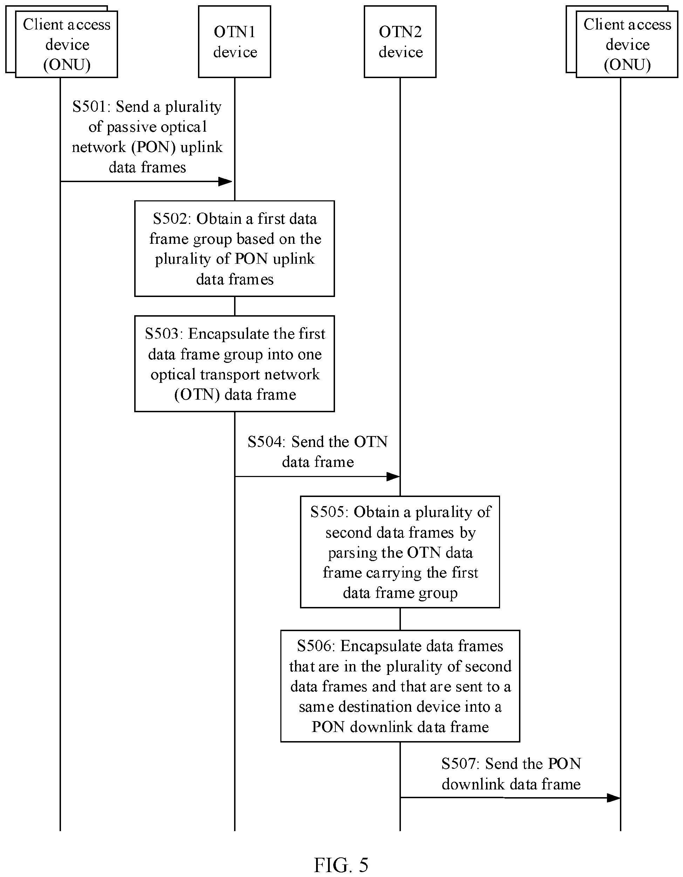

FIG. 5 shows steps that need to be performed for data processing of the foregoing devices. Details are described as follows.

S501: Send a plurality of passive optical network (PON) uplink data frames.

Specifically, an ONU device (for example, the ONU1 or the ONU2) first encapsulates received client data (for example, a wireless service 1 and a wireless service 2) into a data frame used for uplink sending in a PON network. For example, in a gigabit PON (GPON), when the ONU device sends uplink data, a GPON encapsulation method (Gigabit-capable passive optical network Encapsulation Method, GEM) is used to encapsulate service data specified in a standard. For another example, a user-defined PON uplink data frame may be used, and the data frame needs to support an uplink time-division burst mechanism in the PON. Then, the ONU device sends, by using a pre-configured slot, these uplink data frames carrying the client data. In the GPON, the pre-configured slot forms a channel resource, which is also referred to as a transport container (namely, T-CONT). For brief description, the following explanation and description are limited in a GPON data frame specified in a standard. However, in an actual application, an uplink data transport format used by the ONU device is not limited in this application, and it is only required that the ONU device may use a dedicated channel resource and a PON uplink data frame format to send data. In other words, the PON uplink data frame may be user-defined, but a mechanism for sending the data frame is the time-division burst mechanism.

It should be noted that, the PON uplink data frames sent in this step are received by the OTN1 device. Specifically, for a receiving action of the OTN1 device, refer to the description of step S401 in FIG. 4. Details are not described herein again. In another possible implementation, in this step, the PON uplink data frames may be sent to another network device. For details, refer to descriptions in Embodiments 2 and 3. Details are not described herein. Correspondingly, data frames received by the OTN1 device may not necessarily be the PON uplink data frames, and may alternatively be data frames in another format, but the data frames in another format carry the PON uplink data frames. In this embodiment, for example, the data frames received by the OTN1 are the PON uplink data frames.

S502: Obtain a first data frame group based on the plurality of PON uplink data frames.

This step is performed by the OTN1 device. Specifically, after receiving uplink data frames sent by one or more ONU devices, the OTN1 device needs to group these data frames for processing, and allocate corresponding ODU channel resources for these data frame groups, so that client data carried by these data frames can be transmitted through an end-to-end bandwidth guaranteed channel. An advantage of this lies in that transmission quality of the client data, for example, a packet loss rate, a delay, and reliability, can be ensured.

This step is similar to step S402 in FIG. 4. The OTN1 device may perform data grouping based on a time-division channel identifier corresponding to a received PON uplink data frame. Specifically, uplink data frames with a same time-division channel identifier are grouped into one group, to obtain one or more data frame groups. For example, for uplink data frames sent by an ONU device supporting a GPON, the OTN1 device may use an allocation identifier (alloc-ID) for grouping. For a PON network of another type, the OTN1 device may further perform grouping based on another piece of channel resource identifier information of the PON, to ensure that data frames carrying same client data can be grouped into one group.

In a possible implementation, the OTN1 directly classifies the one or more obtained data frame groups as the first data frame group. In another possible implementation, the OTN1 may obtain the first data frame group by parsing the one or more obtained data frame groups. For example, in the GPON network, GEMs frame may be obtained through parsing and are grouped into the first data frame group. For another example, the client data may be obtained through parsing, and client data frames are grouped into the first data frame group.

S503: Encapsulate the first data frame group into one optical transport network (OTN) data frame.

This step is similar to step S403 in FIG. 4. Specifically, the OTN1 device selects one appropriate ODU data frame for the first data frame group, and encapsulates data frames in the first data frame group into the ODU data frame. For example, if a service is a fast Ethernet (Fast Ethernet, FE) service, a bandwidth of the first data frame group is 100 M, and the OTN1 device may select an OTN container of a corresponding bandwidth, to carry the service. For another example, if services are two 4.5 G wireless services, a bandwidth of the first data frame group is 9 G, and the OTN1 device may select an ODUflex whose bandwidth is 9 G as a bearer container.

Optionally, the OTN1 device may further perform a cross-connection on the first data frame group before encapsulating the first data frame group into the OTN data frame, to send the data frame group to an appropriate output port for output. Specifically, the cross-connection may be a time division cross-connection or a space division cross-connection.

S504: Send the OTN data frame.

Specifically, the OTN1 device converts the OTN data frame into a data frame of an appropriate OTN frame format and sends the data frame. For example, the OTN data frame may be converted into an OTU data frame, or a flexible OTN interface data frame (a FlexO data frame).

It should be noted that, the OTN1 device sends the OTN data frame to another OTN2 device. The OTN2 device may be the new OTN device explained in this application, or may be a conventional OTN device. In this embodiment, for example, the OTN1 device sends the OTN data frame to the new OTN device (that is, the OTN2 device).

Optionally, the OTN1 device further has a function of sending bandwidth allocation information, so that bandwidth resource information used by the ONU device can be configured. For example, the OTN1 device may allocate, for an ONU device (namely, the ONU1 or the ONU2) corresponding to the OTN1 device, information about a slot (or a channel) used during uplink data transmission. Specifically, the information includes at least a time-division channel identifier, and a start location and an end location, of a time-division channel indicated by the time-division channel identifier, in a byte of an uplink data frame. It should be noted that the start location and the end location may alternatively be in a unit of a bit or another granularity. This is not limited in this application. For example, in the GPON, a standard overhead of a downlink data frame may be used to send the bandwidth allocation information. It should be noted that the bandwidth resource information sometimes also becomes a bandwidth map. A person skilled in the art may learn that, bandwidth maps received by all ONU devices are the same, and by using the bandwidth maps, all the ONU devices may obtain information about slot (or bandwidth resource) information that can be used by the ONU devices.

Optionally, the OTN1 device may further receive external bandwidth adjustment information, and adjust the used ODU data frame based on the information, to change a bandwidth size of the ODU data frame carrying the first data frame group. Still further, the OTN1 device may further correspondingly adjust bandwidth information of the ONU device, to implement end-to-end channel bandwidth adjustment. In a possible implementation, the external bandwidth adjustment information may be from a controller or a management system. In another possible implementation, the bandwidth adjustment information may be from the ONU device. Specifically, the bandwidth adjustment information (a bandwidth calendar, including bandwidth sizes used in different time periods) may be delivered in advance to the ONU device. When a bandwidth changes, the ONU device may proactively send a request message to the OTN device to request bandwidth adjustment. End-to-end hitless adjustment may be implemented through bandwidth change coordination between the ODU data frame and the ONU device. Using that a hitless adjustment method is used for bandwidth adjustment of an OTN channel as an example, if an increased bandwidth size of the ONU device does not exceed a bandwidth size of an ODU channel corresponding to the ONU device, a bandwidth of the ODU channel does not need to be adjusted, and only a bandwidth of the ONU device needs to be adjusted. If an increased bandwidth size of the ONU device is greater than a bandwidth size of the ODU channel corresponding to the ONU device, a bandwidth of the ODU channel needs to be adjusted first, and then a bandwidth of the ONU device is adjusted. Similarly, if a decrease in a bandwidth of the ONU device does not exceed a minimum adjustment granularity (for example, 1.25 G or 2.5 G, or less) of the ODU channel corresponding to the ONU device, the bandwidth of the ODU channel does not need to be adjusted, and only a bandwidth of the ONU device needs to be adjusted. If a decrease in a bandwidth of the ONU device is already greater than a minimum bandwidth adjustment granularity of the ODU channel corresponding to the ONU device, the bandwidth of the ONU device is first adjusted, and then a bandwidth of the ODU channel is optionally adjusted.

It should be noted that, in this step, the OTN data frame is sent to the OTN2 device. In other words, the OTN2 device directly or indirectly receives the OTN data frame sent by the OTN1 device. If the OTN2 device is directly connected to the OTN1 device, the data is received directly. If the OTN2 device is connected to the OTN1 device by using another device, to form a network, the data is received indirectly.

S505: Obtain a plurality of second data frames by parsing the OTN data frame carrying the first data frame group.

This step and the following two steps are performed by the OTN2 device. Specifically, after receives the OTN data frame carrying the first data frame group, the OTN2 device obtains the plurality of second data frames by parsing these OTN data frames. The second data frames may be in different formats depending on different processing manners of the OTN1 device serving as a transmit end. For example, the data frames may be in a frame format corresponding to slot transmission indicated by the T-CONT. Alternatively, the data frames are in a GEM format or an original client data format.

S506: Encapsulate data frames that are in the plurality of second data frames and that are sent to a same destination device into a PON downlink data frame.

Specifically, the OTN2 device processes the second data frame differently depending on different formats of the second data frames. If the second data frames are in a frame format corresponding to the T-CONT, the OTN2 device needs to obtain a plurality of GEM frames by parsing these data frames. Then the OTN2 device encapsulates GEM frames that are in the plurality of GEM frames and that need to be sent to a same destination device, into the PON downlink data frame. If the second data frames are GEM frames, the OTN2 device directly encapsulates data frames that are in these frames and that are sent to a same destination address into the PON downlink data frame. If the second data frames are client data, the OTN2 device needs to encapsulate these data frames into a GEM frame first, and then encapsulate data frames that are in the GEM frame carrying these data frames and that are sent to a same destination device into the PON downlink data frame. In other words, the OTN2 device needs to perform different processing steps depending on a destination device to which a received data frame should be sent and a format of the data frame. Then, the next step is performed.

S507: Send the PON downlink data frame.

The OTN2 device sends the PON downlink data frame generated in step S506. First, the PON downlink data frame may be sent to different objects depending on different networking structures. In this embodiment, the OTN2 directly sends the PON downlink data frame to an ONU device (for example, an ONU3 or an ONU4). In another scenario, for example, in the scenario described in Embodiments 2 and 3, the OTN2 device may send the PON downlink data frame to a device in another bearer network. Details are not described herein. Second, the OTN2 further needs to determine a destination PON device for the PON downlink data frame. In a possible implementation, a PON port may be used to determine the destination PON device. For example, in FIG. 2, the OTN1 device is connected to the ONU devices by using two ports, where one port is connected to two ONU devices, and the other port is connected to one ONU device. In this case, the OTN1 may determine, by using a port number, a destination device to which a data frame should be sent to. In another possible implementation, an ONU identifier, or an ONU identifier and the PON port together may be used to determine the destination PON device. For example, in FIG. 2, the OTN2 device is connected to two ONU devices. In this case, an ONU device identifier may be used to distinguish between the two ONU devices. Alternatively, similar to the description of step S402 in FIG. 4, the OTN1 may indirectly determine, by using another parameter through external configuration, a destination device to which the PON downlink data frame is sent. A specific manner of distinguishing between data frames that are sent to different destination devices is not limited in this application.

After receiving the downlink data frame sent by the OTN2 device, the ONU device serving as a receiving side obtains corresponding service data through parsing and sends the service data to a service destination device connected to the ONU device, thereby completing a process of sending a service from a source end device to the destination device through an intermediate transmission network.

It should be noted that, optionally, the new OTN device disclosed in this application further needs to have functions such as activating an ONU device and supporting operation, management, and maintenance, so as to support normal operation and management of the ONU device.

In the method provided in this embodiment, an OTN device with a new function is used, so that a network can implement transmission of a client service with the help of a current cost-effective ONU device, thereby reducing network construction costs of the client service. Optionally, the new OTN device may have a bandwidth adjustment capability, and can implement end-to-end service bandwidth adjustment, thereby meeting a requirement of dynamically changing service bandwidths.

It should be noted that, an OTN device is used as an example in FIG. 5, but the procedure described in FIG. 5 is also applicable to a FlexE device. A difference lies in that an OTN data frame needs to be replaced with a FlexE data frame. In other words, used bearer containers have different frame formats, and therefore, corresponding data frames may be processed differently. For example, code block conversion may need to be performed on service data before service data is encapsulated into the FlexE frame. Unless otherwise specified, an execution body of an OTN device embodiment and an execution body of a FlexE device embodiment mentioned in the following embodiments are interchangeable.

### Embodiment 2

An embodiment of this application provides another data processing method, apparatus, and system. In this embodiment, the network scenario in FIG. 2 is used as an example, and it is assumed that the ONU1 device, the ONU2 device, and the OTN1 device are devices on a service sending side, and the OTN2, the ONU4, and the ONU3 are devices on a service receiving side. It should be noted that, different from Embodiment 1, in this embodiment, it is assumed that there is a bearer network between the ONU1 device and the OTN1 device. In other words, the ONU1 device is not directly connected to the OTN1 device, but the ONU1 device and the OTN1 device are interconnected through the bearer network.

Steps performed by an ONU device and an OTN device in this embodiment are basically the same as those in Embodiment 1. In addition, optional steps that may be performed by the OTN device, for example, bandwidth allocation and bandwidth adjustment, are all the same as those of the OTN device in Embodiment 1. For details, refer to FIG. 5 and the related step explanations. Details are not described herein again. Differences between the steps in this embodiment and Embodiment 1 are as follows.

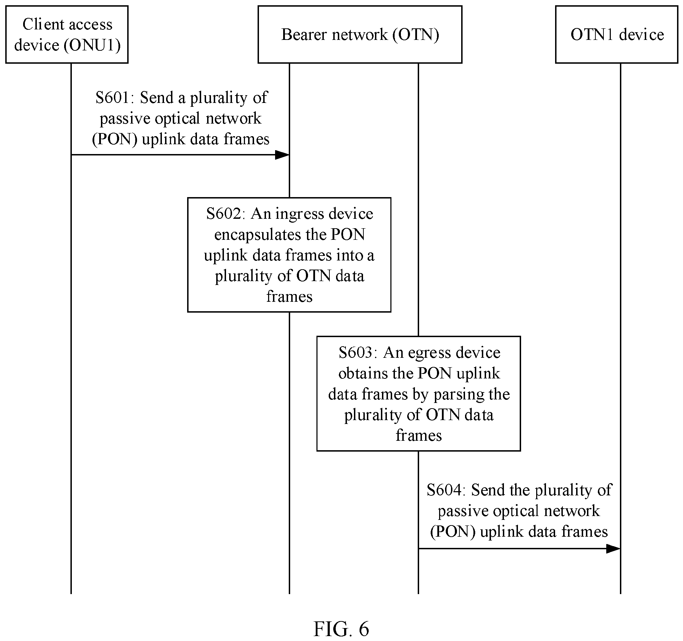

First, the ONU1 device sends a plurality of PON uplink data frames to a device in the bearer network instead of directly to the OTN1 device, that is, performs step S601 in FIG. 6. Correspondingly, steps performed by the bearer network are also shown in FIG. 6. For example, an OTN is used as the bearer network in FIG. 6. Specifically, after an ingress device in the bearer network receives the PON uplink data frames sent by the ONU device, the device in the bearer network performs the following steps.

S602: The ingress device encapsulates the PON uplink data frames into a plurality of OTN data frames.

In other words, the device receiving the PON uplink data frames encapsulates these data frames into the OTN data frames. The OTN data frames are finally transmitted to an egress device in the bearer network after being transmitted by one or more intermediate devices in the bearer network.

S603: The egress device obtains the PON uplink data frames by parsing the plurality of OTN data frames.

In this step, the egress device obtains the PON uplink data frames by parsing the plurality of received OTN data frames.

S604: Send the plurality of passive optical network (PON) uplink data frames.

In this step, the egress device in the bearer network sends, to the OTN1 device, the PON uplink data frames obtained through parsing.

Second, the OTN1 device does not directly receive data from the ONU device, but receives the PON uplink data frames from the device in the bearer network. However, it can be learned from FIG. 6 that there is no difference between a data frame format of the data frame received by the OTN1 device and the data frame format in Embodiment 1.

It should be noted that, using the OTN as the bearer network is only one example, and another network with a remote function may alternatively be used as the bearer network, for example, a network technology such as a FlexE that has a long-distance transfer capability. It should be further noted that, the bearer network in this embodiment may include an intermediate device (not shown in FIG. 6), and the intermediate device completes forwarding of an OTN data frame.

In the method provided in this embodiment, an OTN device with a new function is used, so that a network can implement transmission of a client service with the help of a current cost-effective ONU device, thereby reducing network construction costs of the client service. Optionally, the new OTN device may have a bandwidth adjustment capability, and can implement end-to-end service bandwidth adjustment, thereby meeting a requirement of dynamically changing service bandwidths. Further, by using the bearer network, a distance and a type of a service scenario that can be covered by the OTN are extended.

### Embodiment 3

An embodiment of this application provides still another data processing method, apparatus, and system. In this embodiment, the network scenario in FIG. 2 is used as an example, and it is assumed that the ONU1 device, the ONU2 device, and the OTN1 device are devices on a service sending side, and the OTN2, the ONU4, and the ONU3 are devices on a service receiving side. It should be noted that, different from Embodiment 1, in this embodiment, it is assumed that there is a bearer network between the ONU2 device and the OTN1 device. In other words, the ONU2 device is not directly connected to the OTN1 device, but the ONU2 device and the ONT1 device are interconnected through the bearer network.

In this embodiment, steps performed by an ONU device and an OTN device are basically the same as those in Embodiment 1. In addition, optional steps (for example, bandwidth allocation and bandwidth adjustment) that may be performed by the OTN device are all the same as those of the OTN device in Embodiment 1. For details, refer to FIG. 5 and the related step explanations. Details are not described herein again. Differences between the steps in this embodiment and Embodiment 1 are as follows.

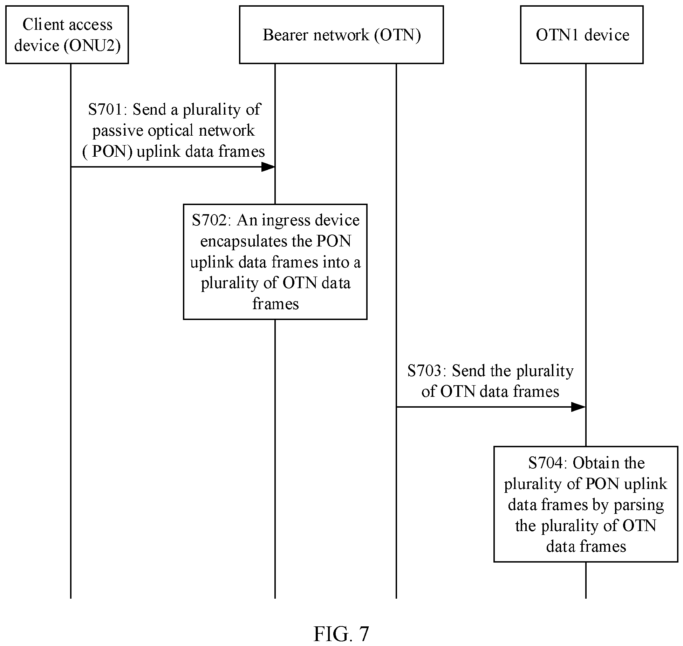

First, the ONU2 device sends a plurality of PON uplink data frames to a device in the bearer network instead of directly to the OTN1 device, that is, performs step S701 in FIG. 7. Correspondingly, steps performed by the bearer network are also shown in FIG. 7. For example, the bearer network serving is an OTN in FIG. 7. Specifically, after an ingress device in the bearer network receives the PON uplink data frames sent by the ONU device, the device in the bearer network performs the following steps.

S702: The ingress device encapsulates the PON uplink data frames into a plurality of OTN data frames.

In other words, the device receiving the PON uplink data frames encapsulates these data frames into the OTN data frames. The OTN data frames are finally transmitted to an egress device in the bearer network after being transmitted by one or more intermediate devices in the bearer network.

S703: Send the plurality of OTN data frames.

This step is performed by the egress device in the bearer network. The egress device is a device, in the bearer network, directly connected to the OTN1 device. Specifically, the egress device in the bearer network sends the received OTN data frames to the OTN1 device.

Second, the OTN1 device receives data from the device in the bearer network instead of directly from the ONU2 device. In addition, the received data is no longer a PON uplink data frame, but is an OTN data frame carrying a PON uplink data frame.

Third, the OTN1 device needs an additional step to process the received data frame, that is, step S704 described below.

S704: Obtain the plurality of PON uplink data frames by parsing the plurality of OTN data frames.

Specifically, before the OTN1 device processes the data frames as described in Embodiment 1, the OTN1 device needs to obtain the PON uplink data frames by collecting and parsing the received OTN data frames.

The procedure performed by the OTN2 device and ONU3 device at the receiving side is the same as that of the OTN2 device and ONU4 device described in Embodiment 1. Details are not described herein again. The only difference between the two procedures lies in that, in Embodiment 1, the client data obtained through parsing by the ONU4 device is a wireless service, and a video service is obtained through parsing by the ONU3. Therefore, if the OTN2 device is capable of allocating and adjusting bandwidths for the ONU3 device and the ONU4 device, bandwidth sizes and time-division channel identifiers allocated by the OTN2 device for the two ONU devices may be different.

In the method provided in this embodiment, an OTN device with a new function is used, so that a network can implement transmission of a client service with the help of a current cost-effective ONU device, thereby reducing network construction costs of the client service. Optionally, the new OTN device may have a bandwidth adjustment capability, and can implement end-to-end service bandwidth adjustment, thereby meeting a requirement of dynamically changing service bandwidths. Further, by using a bearer network, a type of a service scenario that can be covered by the OTN network is extended.

### Embodiment 4

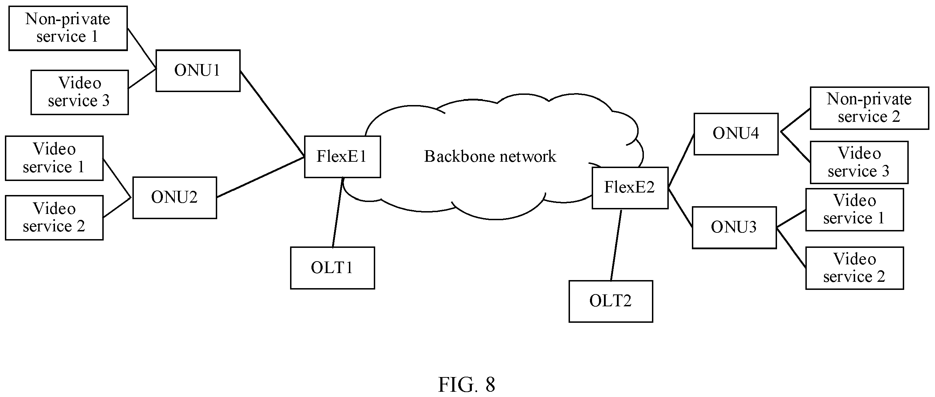

An embodiment of this application provides yet another data processing method, apparatus, and system. In this embodiment, the network scenario in FIG. 8 is used as an example, and it is assumed that an ONU1 device, an ONU2 device, and a FlexE1 device are devices on a service sending side, and a FlexE2, an ONU3 and an ONU4 are devices on a service receiving side. It should be noted that, different from Embodiment 1, a new device disclosed in this embodiment is a FlexE device. In addition, the FlexE device in this embodiment further needs to interact with an optical line terminal (Optical Line Terminal, OLT) in a PON network. For example, the FlexE1 device interacts with an OLT1 device, and the FlexE2 device interacts with an OLT2 device.

It should be noted that, for a video service, steps of describing interactions between the ONU1/ONU2 device, the FlexE1 device, the FlexE2 device, and the ONU3/ONU4 device in this embodiment are similar to the steps of describing interaction between the ONU device and the OTN device in Embodiment 1. Details are not described herein again. Differences between this embodiment and Embodiment 1 are as follows.

First, the new device in this embodiment is the FlexE device, while an OTN device is used as an example in Embodiment 1. Different frame structures are used for the two devices. It should be noted that the method provided in this embodiment may also be applied to a new OTN device.

Second, the ONU devices carry different client services. It should be noted that this difference has no impact on the steps performed by the devices.

Further, in addition to interacting with the ONU device, the FlexE device needs to interact with the OLT. In other words, not all data frames sent by the ONU device need to be sent to a FlexE device on a peer side. Instead, the FlexE device needs to determine, based on a type of a service carried in a data frame, whether to send the data frame to the FlexE device on the peer side or to the OLT device. Alternatively, the FlexE device may determine, based on configuration information, which data frames need to be sent to the OLT device. Correspondingly, the FlexE device is capable of performing a cross-connection. In addition, the FlexE device further needs to comprehensively consider how to allocate a bandwidth to each ONU device in combination with bandwidth information sent by the OLT device.

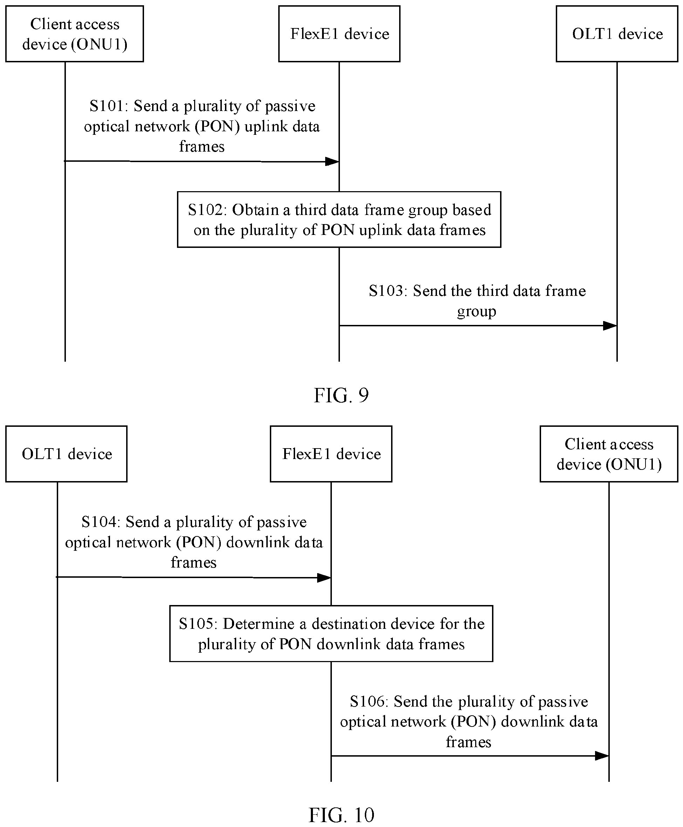

In terms of the last difference, FIG. 9 and FIG. 10 describe interaction between the related ONU device, FlexE device, and OLT device in detail. It should be noted that, the ONU1, the FlexE1, and the OLT1 are used as an example in FIG. 9 and FIG. 10.

FIG. 9 shows that the ONU1 is used as a sending device, the FlexE1 is used as a forwarding device, and the OLT1 is used as a receiving device. Corresponding specific steps are described as follows.

S101: Send a plurality of passive optical network (PON) uplink data frames.

Specifically, the ONU1 sends the plurality of PON uplink data frames. It should be noted that, the PON uplink data frames sent by the ONU1 device include both a data frame that supports a video service 1 and a data frame that supports a non-private line service 1. It should be noted that the non-private line service is a service that needs to be processed by the OLT. The private line service is the service having a guaranteed bandwidth requirement in the foregoing descriptions. The plurality of PON uplink data frames is received by the FlexE1 device.

S102: Obtain a third data frame group based on the plurality of PON uplink data frames.

Specifically, the FlexE1 device obtains the third data frame group based on the plurality of PON uplink data frames. The third data frame group includes a data frame that needs to be sent to the OLT1 device. It should be noted that, optionally, similar to Embodiment 2 or 3, there may also be a bearer network between the ONU1 and the FlexE1. If an egress device in the bearer network can obtain the PON uplink data frames through parsing, the FlexE1 device remains unchanged. If an egress device in the bearer network does not obtain the PON uplink data frames through parsing, that is, the egress device sends a FlexE data frame or an OTN data frame that carries the PON uplink data frames, the FlexE1 device further needs to first obtain the plurality of PON uplink data frames by parsing the received data frame, and then perform this step.

S103: Send the third data frame group.

Specifically, the FlexE1 device sends the third data frame group. It should be noted that, in this embodiment, the FlexE1 device has two egress ports. Therefore, the FlexE1 is capable of performing a cross-connection, and can send, through a correct port, a data frame or a data frame group that needs to be sent.

FIG. 10 shows that the OLT1 is used as a sending device, the FlexE1 is used as a forwarding device, and the ONU1 is used as a receiving device. Specific steps are described as follows.

S104: Send a plurality of passive optical network (PON) downlink data frames.

Specifically, the OLT1 device sends the plurality of passive optical network (PON) downlink data frames to the FlexE1 device.

S105: Determine a destination device for the plurality of PON downlink data frames.

Specifically, the FlexE1 device needs to determine a destination device to which the plurality of passive optical networks (PON) downlink data frames need to be sent, for example, the ONU1 or the ONU2. In this embodiment, the destination device is the ONU1 device.

S106: Send the plurality of passive optical network (PON) downlink data frames.

Specifically, the FlexE1 device sends the plurality of passive optical network (PON) downlink data frames to the ONU1 device. Similar to step S103, the FlexE1 device also needs to send, to a correct destination device by using a cross-connect board or a cross-connect module, a data frame that needs to be sent.

It should be noted that, in this embodiment, when performing bandwidth allocation control on the ONU device, the FlexE1 device and the FlexE2 device not only need to consider a transmission bandwidth of a private line service (for example, a video service or a wireless service), but also need to consider a transmission bandwidth of a non-private line service exchanged with the OLT device.

According to the method provided in this embodiment, a FlexE device (or an OTN device) with a new function is used, so that a network can implement transmission of a private line client service with the help of a current cost-effective ONU device, thereby reducing network construction costs of the client service. The new FlexE device may have a bandwidth adjustment capability, and can implement end-to-end service bandwidth adjustment, thereby meeting a requirement of dynamically changing service bandwidths. In addition, the device with the new function can support a hybrid service type, thereby providing better service bearer flexibility.

### Embodiment 5

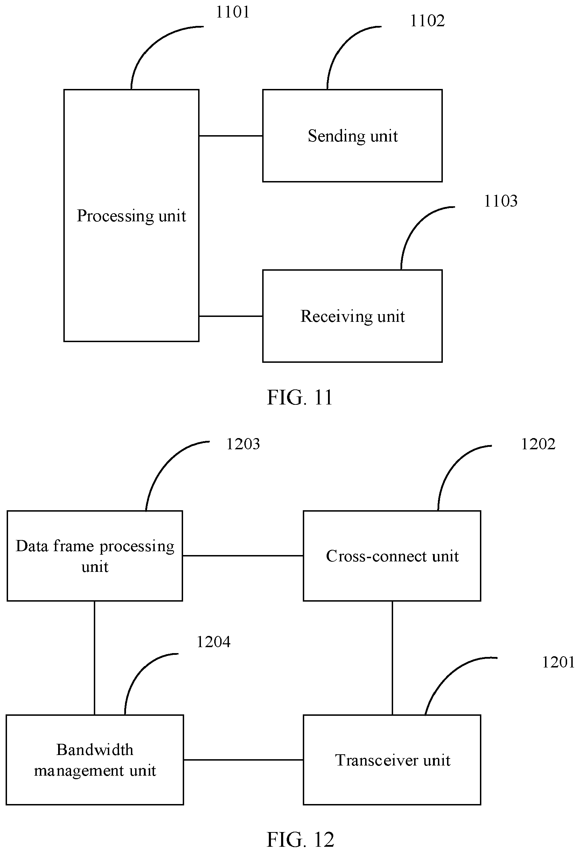

FIG. 11 is a schematic structural diagram of a possible network device. The network device includes a processing unit 1101, a sending unit 1102, and a receiving unit 1103. It should be noted that, the network device may be used as the new OTN device or the new FlexE device that implements different actions in the forgoing Embodiments 1 to 4, to implement data transmission.

In a possible implementation, the network device is an OTN device or a FlexE device on a sending side that is described in any one of Embodiments 1 to 4. For example, the processing unit 1101 performs steps S402 and S403 in FIG. 4. Specifically, the processing unit 1101 is configured to perform the data frame processing steps of the OTN1 device in Embodiments 1 to 3, or perform the data frame processing step of the FlexE1 device in Embodiment 4. Optionally, the processing unit 1101 further needs to perform other optional processing steps described in Embodiments 1 to 4. Details are not described herein again. The sending unit 1102 is configured to perform S404 shown in FIG. 4. Specifically, the sending unit 1102 is configured to perform the data frame sending actions of the OTN1 device in Embodiments 1 to 3, or perform the data frame sending action of the FlexE1 device in Embodiment 4. The receiving unit 1103 is configured to perform S401 shown in FIG. 4. Specifically, the processing unit 1103 is configured to perform the data frame receiving actions of the OTN1 device in Embodiments 1 to 3, or perform the data frame receiving action of the FlexE1 device in Embodiment 4.

In another possible implementation, the network device is an OTN device or a FlexE device on a receiving side that is described in any one of Embodiments 1 to 4. Specifically, the processing unit 1101 is configured to perform the data frame processing steps of the OTN2 device in Embodiments 1 to 3, or perform the processing step of the FlexE2 device in Embodiment 4. Optionally, the processing unit 1101 further needs to perform other optional processing steps described in Embodiments 1 to 4. Details are not described herein again. The sending unit 1102 is configured to perform the data frame sending actions of the OTN2 device in Embodiments 1 to 3, or perform the data frame sending action of the FlexE2 device in Embodiment 4. The receiving unit 1103 is configured to perform the data frame receiving actions of the OTN2 device in Embodiments 1 to 3, or perform the data frame receiving action of the FlexE2 device in Embodiment 4.

In still another possible implementation, the network device has two capabilities: sending and receiving a PON data frame. In other words, a single network device supports the foregoing two device capabilities. Specifically, steps supported by the processing unit, the sending unit, and the receiving unit are described in the foregoing two aspects. Details are not described herein again.

This embodiment of this application further provides a chip. A circuit configured to implement a function of the processor 1101 and one or more interfaces are integrated into the chip. When a memory is integrated into the chip, the chip is connected to an optical transceiver module through the interface, so that the data frames mentioned in the foregoing method embodiments are sent to another network device by using the optical transceiver module, or frames sent by another network device is received from the optical transceiver module. When no memory is integrated into the chip, the chip may be connected to an external memory through the interface, and the chip implements, based on program code stored in the external memory, the actions performed in the network device in the foregoing embodiments, and sends and receives the data frames by using an optical transceiver module connected to the chip. Optionally, functions supported by the chip may include the frame processing action mentioned in any one of Embodiments 1 to 4. Details are not described herein again.

It should be noted that an action correspondingly performed by each unit is merely a specific example. For an action actually performed by each unit, refer to the actions/steps mentioned in the descriptions of the foregoing Embodiments 1 to 4. It should be further noted that, when the new device disclosed in this application is an OTN device, the units may be located in the tributary board or a board including a function of the tributary board in the diagram of the hardware structure of the OTN shown in FIG. 2. A specific location of each unit in the board is not limited in this application.

It should be further noted that the processing unit, the sending unit, the receiving unit, and the transceiver unit may be replaced with a processor, a transmitter, a receiver, and a transceiver.

FIG. 12 is a schematic structural diagram of another possible network device. The network device includes a transceiver unit 1201, a cross-connect unit 1202, a data frame processing unit 1203, and a bandwidth management unit 1204. It should be noted that, the network device may be used as the new OTN device or the new FlexE device that implements different actions in the forgoing Embodiments 1 to 4, to implement data transmission. It should be further noted that, the cross-connect unit 1202 and the bandwidth management unit 1204 are optional units. If there is no cross-connect unit 1202, the data frame processing unit 1203 is directly connected to the transceiver unit 1201. If there is no bandwidth management unit 1204, a function of ONU bandwidth management may be implemented by using a network management system or a separate controller.

In a possible implementation, the network device is an OTN device or a FlexE device on a sending side that is described in any one of Embodiments 1 to 4. For example, the data frame processing unit 1203 performs steps S402 and S403 in FIG. 4. Specifically, the data frame processing unit 1203 is configured to perform the data frame processing steps of the OTN1 device in Embodiments 1 to 3, or perform the processing step of the FlexE1 device in Embodiment 4. Optionally, the bandwidth management unit 1204 and the cross-connect unit 1202 further need to perform the related steps (namely, a bandwidth management step and a cross-connection action) described in Embodiments 1 to 4. Details are not described herein again. The transceiver unit 1201 is configured to perform S401 and S404 shown in FIG. 4. Specifically, the transceiver unit 1201 is configured to perform the data frame sending and receiving actions of the OTN1 device in Embodiments 1 to 3, or perform the data frame sending and receiving actions of the FlexE1 device in Embodiment 4.

In another possible implementation, the network device is an OTN device or a FlexE device on a receiving side that is described in any one of Embodiments 1 to 4. Specifically, the data frame processing unit 1203 is configured to perform the data frame processing steps of the OTN2 device in Embodiments 1 to 3, or perform the processing step of the FlexE2 device in Embodiment 4. Optionally, the bandwidth management unit 1204 and the cross-connect unit 1202 further need to perform the related steps described in Embodiments 1 to 4. Details are not described herein again. The transceiver unit 1201 is configured to perform the data frame sending and receiving actions of the OTN2 device in Embodiments 1 to 3, or perform the data frame sending and receiving actions of the FlexE2 device in Embodiment 4.

In still another possible implementation, the network device has two capabilities: sending and receiving a PON data frame. In other words, a single network device supports the foregoing two device capabilities. Specifically, an action supported by each unit is described in the foregoing two aspects. Details are not described herein again.

It should be noted that the data frame processing unit 1203, the cross-connect unit 1202, and the bandwidth management unit 1204 may be implemented by one or more processors.

A person of ordinary skill in the art may understand that all or some of the steps in the foregoing embodiments may be implemented by hardware or a program instructing related hardware. The program may be stored in a computer-readable storage medium. The storage medium may be a read-only memory, a random access memory, or the like. For example, the foregoing processing unit or processor may be a central processing unit, a general-purpose processor, a digital signal processor (DSP), an application-specific integrated circuit (ASIC), a field programmable gate array (FPGA) or another programmable logical device, a transistor logical device, a hardware component, or any combination thereof. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the embodiments, the method steps in the foregoing embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transfer apparatus, wherein the apparatus comprises a transceiver and a processor, wherein
the transceiver is configured to receive a plurality of first data frames, wherein the first data frame is a passive optical network, PON, uplink data frame or a data frame carrying a PON uplink data frame;
the processor is configured to:
obtain a second data frame group based on the plurality of first data frames, wherein the second data frame group is used to carry service data that is sent to a same destination device; and
encapsulate the second data frame group into a third data frame; and
the transceiver is further configured to send the third data frame carrying the second data frame group.

2. The apparatus according to claim 1, wherein the third data frame is an optical transport network, OTN, data frame or a flexible Ethernet, FlexE, data frame.

3. The apparatus according to claim 1 or 2, wherein the obtaining a data frame group based on the plurality of first data frames comprises:
if the first data frame is a PON uplink data frame, grouping data frames that are in the plurality of first data frames and have a same time-division channel identifier into the second data frame group; or
if the first data frame is a data frame carrying a PON uplink data frame, obtaining a plurality of PON uplink data frames by parsing the plurality of first data frames, and grouping data frames that are in the PON uplink data frames and have a same time-division channel identifier into the second data frame group.

4. The apparatus according to claim 1 or 2, wherein the obtaining a second data frame group based on the plurality of first data frames specifically comprises:
if the first data frame is a passive optical network PON uplink data frame, grouping data frames that are in the plurality of first data frames and have a same time-division channel identifier into a fourth data frame group; and
obtaining client data by parsing the fourth data frame group, and grouping the client data into the second data frame group.

5. The apparatus according to claim 1 or 2, wherein if the first data frame is a standard PON uplink data frame, the obtaining a second data frame group based on the plurality of first data frames specifically comprises:
grouping data frames that are in the plurality of first data frames and have a same time-division channel identifier into a fourth data frame group; and
obtaining a plurality of gigabit-capable passive optical network encapsulation method, GEM, frames by parsing the fourth data frame group, and grouping the plurality of GEM frames into the second data frame group.

6. The apparatus according to claim 1 or 2, wherein if the first data frame is a data frame carrying a standard PON uplink data frame, the obtaining a second data frame group based on the plurality of first data frames specifically comprises:
obtaining a plurality of PON uplink data frames by parsing the plurality of first data frames;
grouping data frames that are in the plurality of PON uplink data frames and have a same time-division channel identifier into a fourth data frame group; and
obtaining a plurality of gigabit-capable passive optical network encapsulation method (GEM) frames by parsing the fourth data frame group, and grouping the plurality of GEM frames into the second data frame group.

7. The apparatus according to any one of claims 1 to 6, wherein the processor is further configured to send bandwidth allocation information to an ONU; and the bandwidth allocation information comprises a time-division channel identifier, and a start location and an end location, of a time-division channel corresponding to the time-division channel identifier, in a byte of an uplink data frame.

8. The apparatus according to claim 7, wherein the processor is further configured to: receive bandwidth adjustment information, and adjust bandwidth of the third data frame and bandwidth of the ONU based on the bandwidth adjustment information.

9. The apparatus according to any one of claims 1 to 8, wherein the processor is further configured to perform a cross-connection on the second data frame group.

10. The apparatus according to any one of claims 1 to 9, wherein the cross-connection is a time division cross-connection or a space division cross-connection.

11. A data transfer apparatus, wherein the apparatus comprises a transceiver and a processor, wherein
the transceiver is configured to receive a plurality of first data frames, wherein the first data frame is an optical transport network, OTN, data frame or a flexible Ethernet, FlexE, data frame;
the processor is configured to:
obtain a plurality of second data frames by parsing the plurality of first data frames; and
encapsulate data frames that are in the plurality of second data frames and that are sent to a same destination device into a passive optical network, PON, downlink data frame; and
the transceiver is further configured to send the PON downlink data frame.

12. The apparatus according to claim 11, wherein the processor is further configured to send bandwidth allocation information to an optical network unit (ONU); and the bandwidth allocation information comprises a time-division channel identifier, and a start location and an end location, of a time-division channel corresponding to the time-division channel identifier, in a byte of an uplink data frame.

13. The apparatus according to claim 11 or 12, wherein the processor is further configured to perform a cross-connection on the plurality of second data frame groups.

14. The apparatus according to claim 13, wherein the cross-connection is a time division cross-connection or a space division cross-connection.

15. The apparatus according to any one of claims 11 to 14, wherein the encapsulating data frames that are in the plurality of second data frames and that are sent to a same destination device into a PON downlink data frame comprises:
a frame format of the plurality of second data frames is a data frame format received by using a slot resource indicated by a transport container, T-CONT; and
obtaining a gigabit-capable passive optical network encapsulation method (GEM) frame by parsing each of the data frames that are in the plurality of second data frames and that are sent to the same destination device, and encapsulating each GEM frame into the PON downlink data frame.

16. The apparatus according to any one of claims 11 to 14, wherein the encapsulating data frames that are in the plurality of second data frames and that are sent to the same destination device into a PON downlink data frame specifically comprises:
a frame format of the plurality of second data frames is a gigabit-capable passive optical network encapsulation method, GEM, frame format; and
directly encapsulating the data frames that are in the plurality of second data frames and that are sent to the same destination device into the PON downlink data frame.

17. The apparatus according to any one of claims 11 to 14, wherein the encapsulating data frames that are in the plurality of second data frames and that are sent to the same destination device into a PON downlink data frame specifically comprises:
a frame format of the plurality of second data frames is a client data frame format; and
encapsulating each of the data frames that are in the plurality of second data frames and that are sent to the same destination device into one gigabit-capable passive optical network encapsulation method, GEM, frame, and encapsulating each GEM frame into the PON downlink data frame.

18. The apparatus according to any one of claims 11 to 17, wherein the sending the PON downlink data frame comprises: encapsulating the downlink data frame into a third data frame, and then sending the third data frame.

19. A data transfer method, wherein the method comprises:
receiving a plurality of first data frames, wherein the first data frame is a passive optical network, PON, uplink data frame or a data frame carrying a PON uplink data frame;
obtaining a second data frame group based on the plurality of first data frames, wherein the second data frame group is used to carry service data that is sent to a same destination device;
encapsulating the second data frame group into a third data frame; and
sending the third data frame.

20. The method according to claim 19, wherein the third data frame is an optical transport network (OTN) data frame or a flexible Ethernet (FlexE) data frame.

21. The method according to claim 19 or 20, wherein the obtaining a second data frame group based on the plurality of first data frames comprises:
if the first data frame is a PON uplink data frame, grouping data frames that are in the plurality of first data frames and have a same time-division channel identifier into the second data frame group; or
if the first data frame is a data frame carrying a PON uplink data frame, obtaining a plurality of PON uplink data frames by parsing the plurality of first data frames, and grouping data frames that are in the PON uplink data frames and have a same time-division channel identifier into the second data frame group.

22. The method according to claim 19 or 20, wherein the obtaining a second data frame group based on the plurality of first data frames specifically comprises:
if the first data frame is a PON uplink data frame, grouping data frames that are in the plurality of first data frames and have a same time-division channel identifier into a fourth data frame group; and
obtaining client data by parsing the fourth data frame group, and grouping the client data into the second data frame group.

23. The method according to claim 19 or 20, wherein if the first data frame is a standard PON uplink data frame, the obtaining a second data frame group based on the plurality of first data frames specifically comprises:
grouping data frames that are in the plurality of first data frames and have a same time-division channel identifier into a fourth data frame group; and
obtaining a plurality of gigabit-capable passive optical network encapsulation method (GEM) frames by parsing the fourth data frame group, and grouping the plurality of GEM frames into the second data frame group.

24. The method according to claim 19 or 20, wherein if the first data frame is a data frame carrying a standard PON uplink data frame, the obtaining a second data frame group based on the plurality of first data frames specifically comprises:
obtaining a plurality of PON uplink data frames by parsing the plurality of first data frames;
grouping data frames that are in the plurality of PON uplink data frames and have a same time-division channel identifier into a fourth data frame group; and
obtaining a plurality of gigabit-capable passive optical network encapsulation method (GEM) frames by parsing the fourth data frame group, and grouping the plurality of GEM frames into the second data frame group.

25. The method according to any one of claims 19 to 24, wherein the method further comprises: sending bandwidth allocation information to an ONU; and the bandwidth allocation information comprises a time-division channel identifier, and a start location and an end location, of a time-division channel corresponding to the time-division channel identifier, in a byte of an uplink data frame.

26. The method according to any one of claims 19 to 25, wherein the method further comprises: performing a cross-connection on the second data frame group.

27. A data transfer method, wherein the method comprises:
receiving a plurality of first data frames, wherein the first data frame is an optical transport network, OTN, data frame or a flexible Ethernet, FlexE, data frame;
obtaining a plurality of second data frames by parsing the plurality of OTN data frames;
encapsulating data frames that are in the plurality of second data frames and that are sent to a same destination device into a passive optical network, PON, downlink data frame; and
sending the PON downlink data frame.

28. The method according to claim 27, wherein the method further comprises: sending bandwidth allocation information to an optical network unit (ONU); and the bandwidth allocation information comprises a time-division channel identifier, and a start location and an end location, of a time-division channel corresponding to the time-division channel identifier, in a byte of an uplink data frame.

29. The method according to claim 27 or 28, wherein the method further comprises: performing a cross-connection on the plurality of second data frame groups.

30. The method according to any one of claims 27 to 29, wherein the encapsulating data frames that are in the plurality of second data frames and that are sent to a same destination device into a PON downlink data frame comprises:
if a frame format of the plurality of second data frames is a data frame format received by using a slot resource indicated by a transmission container (T-CONT), obtaining one gigabit-capable passive optical network encapsulation method (GEM) frame by parsing each of the data frames that are in the plurality of second data frames and that are sent to a same destination device, and encapsulating each GEM frame into the PON downlink data frame.

31. The method according to any one of claims 27 to 29, wherein the encapsulating data frames that are in the plurality of second data frames and that are sent to a same destination device into a PON downlink data frame specifically comprises:
if a frame format of the plurality of second data frames is a gigabit-capable passive optical network encapsulation method (GEM) frame format, directly encapsulating the data frames that are in the plurality of second data frames and that are sent to a same destination device into the PON downlink data frame.

32. The method according to any one of claims 27 to 29, wherein the encapsulating data frames that are in the plurality of second data frames and that are sent to a same destination device into a PON downlink data frame specifically comprises:
if a frame format of the plurality of second data frames is a client data frame format, encapsulating each of the data frames that are in the plurality of second data frames and that are sent to a same destination device, into a gigabit-capable passive optical network encapsulation method (GEM) frame, and encapsulating each GEM frame into the PON downlink data frame.

33. The method according to any one of claims 27 to 32, wherein the sending the PON downlink data frame comprises: encapsulating the downlink data frame into a third data frame, and sending the third data frame.
